(19) Europäisches Patentamt
European Patent Office
Office européen des brevets

(11) **EP 4 529 296 A1**

(12) **EUROPEAN PATENT APPLICATION**
published in accordance with Art. 153(4) EPC

(43) Date of publication:
**26.03.2025 Bulletin 2025/13**

(51) International Patent Classification (IPC):
***H04W 52/14*** (2009.01)

(21) Application number: **23915740.7**

(52) Cooperative Patent Classification (CPC):
**Y02D 30/70**

(22) Date of filing: **05.12.2023**

(86) International application number:
**PCT/CN2023/136369**

(87) International publication number:
**WO 2024/148982 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 CN 202310081381**

(71) Applicant: **Honor Device Co., Ltd.
Shenzhen, Guangdong 518040 (CN)**

(72) Inventor: **YANG, Shutao
Shenzhen, Guangdong 518040 (CN)**

(74) Representative: **Gill Jennings & Every LLP
The Broadgate Tower
20 Primrose Street
London EC2A 2ES (GB)**

(54) **METHOD AND APPARATUS FOR CONTROLLING TRANSMISSION POWER OF PUCCH, AND USER EQUIPMENT**

(57) This application is applicable to the field of communication technologies, and provides a method and an apparatus for controlling transmit power of a PUCCH, and a user equipment. The method includes: obtaining a PRACH transmit power ramp-up when random access between the user equipment and a base station succeeds; adjusting, when a radio resource control setup message sent by the base station includes a power configuration field corresponding to the PUCCH, the PRACH transmit power ramp-up based on the PRACH transmit power ramp-up and/or a value of the power configuration field; determining, based on an adjusted PRACH transmit power ramp-up, a power adjustment value of the PUCCH; and determining, based on a preset PUCCH transmit power calculation formula, the value of the power configuration field, and the power adjustment value, target transmit power of the PUCCH. In this way, the power adjustment value of the PUCCH is flexibly adjusted, to maintain the transmit power of the PUCCH stable, so that congestion in uplink data transmission is avoided.

```
┌─────────────────────────────────────────────────────────┐
│ Obtain a PRACH transmit power ramp-up when random        │──── 101
│ access between a UE and a base station succeeds          │
└─────────────────────────────────────────────────────────┘
                          │
┌─────────────────────────────────────────────────────────┐
│ Obtain an RRC setup message sent by the base station     │──── 102
└─────────────────────────────────────────────────────────┘
                          │
┌─────────────────────────────────────────────────────────┐
│ Adjust, when the RRC setup message includes a power      │──── 103
│ configuration field corresponding to a PUCCH, the PRACH  │
│ transmit power ramp-up based on the PRACH transmit power  │
│ ramp-up and/or a value of the power configuration field  │
└─────────────────────────────────────────────────────────┘
                          │
┌─────────────────────────────────────────────────────────┐
│ Determine, based on an adjusted PRACH transmit power     │──── 104
│ ramp-up, a target power adjustment value corresponding   │
│ to the PUCCH                                             │
└─────────────────────────────────────────────────────────┘
                          │
┌─────────────────────────────────────────────────────────┐
│ Determine, based on a preset PUCCH transmit power        │──── 105
│ calculation formula, the value of the power configuration │
│ field, and the target power adjustment value, target     │
│ transmit power corresponding to the PUCCH                │
└─────────────────────────────────────────────────────────┘
```

FIG. 1

## Description

This application claims priority to Chinese Patent Application No. 202310081381.X, filed with the China National Intellectual Property Administration on January 13, 2023 and entitled "METHOD AND APPARATUS FOR CONTROLLING TRANSMIT POWER OF PUCCH, AND USER EQUIPMENT", which is incorporated herein by reference in its entirety.

## TECHNICAL FIELD

This application belongs to the field of communication technologies, and in particular, to a method and an apparatus for controlling transmit power of a PUCCH, a user equipment, and a computer-readable storage medium.

## BACKGROUND

When a user equipment (User Equipment, UE) sets up a connection to a base station, if a distance between the UE and the base station is small, a path loss experienced by a signal is small, and the UE may set up communication with the base station at small transmit power. On the contrary, if a distance between the UE and the base station is large, a path loss experienced by a signal is large, and the UE needs to set up communication with the base station at large transmit power. To compensate for transmission losses on different paths and maintain stable received power of the base station, transmit power of a physical uplink control channel (Physical Uplink Control Channel, PUCCH) between the UE and the base station needs to be controlled.

In a related technology, in a process in which the UE sets up a connection to the base station through random access, if the UE and the base station are in an environment with poor reference signal received power (Reference Signal Receiving Power, RSRP), the UE needs to retry sending on a random access channel (Physical Random Access Channel, PRACH) for a plurality of times before the access succeeds. During each retry, the UE ramps up transmit power until the random access succeeds. In addition, the UE uses a power ramp-up during the random access as a transmit-power adjustment value in subsequent calculation of the transmit power of the PUCCH. However, if the base station configures a power configuration field (for example, p0-PUCCH-Value) corresponding to the PUCCH in a radio resource control (Radio Resource Control, RRC) setup message, the power ramp-up during the random access is reset to 0. Consequently, the transmit power of the PUCCH decreases steeply, causing a sending failure of information carried on the PUCCH, and further causing congestion in uplink data transmission. As a result, stuttering or even disconnection occurs in a system.

## SUMMARY

Embodiments of this application provide a method and an apparatus for controlling transmit power of a PUCCH, a UE, and a storage medium, to resolve a problem that when a base station configures a power configuration field corresponding to the PUCCH in an RRC setup message, a power ramp-up during a random access is reset to 0, causing steep decreasing of the transmit power of the PUCCH, causing a sending failure of information carried on the PUCCH, further causing congestion in uplink data transmission, and causing stuttering or even disconnection to occur in a system.

According to a first aspect, an embodiment of this application provides a method for controlling transmit power of a PUCCH. The method includes: obtaining a PRACH transmit power ramp-up when random access between a UE and a base station succeeds; obtaining an RRC setup message sent by the base station; adjusting, when the RRC setup message includes a power configuration field corresponding to the PUCCH, the PRACH transmit power ramp-up based on the PRACH transmit power ramp-up and/or a value of the power configuration field; determining, based on an adjusted PRACH transmit power ramp-up, a target power adjustment value corresponding to the PUCCH; and determining, based on a preset PUCCH transmit power calculation formula, the value of the power configuration field, and the target power adjustment value, target transmit power corresponding to the PUCCH.

In a possible implementation of the first aspect, the adjusting the PRACH transmit power ramp-up based on the PRACH transmit power ramp-up and/or a value of the power configuration field includes:

setting the PRACH transmit power ramp-up to 0 if the PRACH transmit power ramp-up is less than or equal to a first threshold; or
maintaining the PRACH transmit power ramp-up unchanged if the PRACH transmit power ramp-up is greater than the first threshold.

Optionally, in another possible implementation of the first aspect, the adjusting the PRACH transmit power ramp-up based on the PRACH transmit power ramp-up and/or a value of the power configuration field includes:

setting the PRACH transmit power ramp-up to 0 if the value of the power configuration field is greater than a second threshold; or
maintaining the PRACH transmit power ramp-up unchanged if the value of the power configuration field is less than or equal to the second threshold.

Optionally, in still another possible implementation of the first aspect, the adjusting the PRACH transmit power ramp-up based on the PRACH transmit power ramp-up and/or a value of the power configuration field includes:

setting the PRACH transmit power ramp-up to 0 if the PRACH transmit power ramp-up is less than or equal to a first threshold and the value of the power configuration field is greater than a second threshold; or
maintaining the PRACH transmit power ramp-up unchanged if the PRACH transmit power ramp-up is greater than the first threshold or the value of the power configuration field is less than or equal to the second threshold.

Optionally, in yet another possible implementation of the first aspect, the adjusting the PRACH transmit power ramp-up based on the PRACH transmit power ramp-up and/or a value of the power configuration field includes:

determining a difference between the PRACH transmit power ramp-up and the value of the power configuration field; and
setting the PRACH transmit power ramp-up to 0 if the difference is less than or equal to a third threshold; or
maintaining the PRACH transmit power ramp-up unchanged if the difference is greater than the third threshold.

Optionally, in yet another possible implementation of the first aspect, the adjusting the PRACH transmit power ramp-up based on the PRACH transmit power ramp-up and/or a value of the power configuration field includes:

determining initial transmit power corresponding to an initial PUCCH message, where the initial PUCCH message is a feedback message including a parsing result of the RRC setup message and sent by the UE to the base station through the PUCCH; and
setting the PRACH transmit power ramp-up to 0 if the initial transmit power is less than maximum transmit power corresponding to the UE; or
maintaining the PRACH transmit power ramp-up unchanged if the initial transmit power is greater than or equal to the maximum transmit power.

Optionally, in yet another possible implementation of the first aspect, the determining initial transmit power corresponding to an initial PUCCH message includes:
determining, based on the preset PUCCH transmit power calculation formula and the PRACH transmit power ramp-up, the initial transmit power corresponding to the PUCCH.

Optionally, in another possible implementation of the first aspect, the adjusting the PRACH transmit power ramp-up based on the PRACH transmit power ramp-up and/or a value of the power configuration field includes:

determining a difference between the PRACH transmit power ramp-up and the value of the power configuration field;
determining, based on the preset PUCCH transmit power calculation formula and the PRACH transmit power ramp-up, initial transmit power corresponding to the PUCCH; and
setting the PRACH transmit power ramp-up to 0 if the difference is less than or equal to a third threshold and the initial transmit power is less than maximum transmit power corresponding to the UE; or
maintaining the PRACH transmit power ramp-up unchanged if the difference is greater than the third threshold or the initial transmit power is greater than or equal to the maximum transmit power.

Optionally, in still another possible implementation of the first aspect, before the determining, based on an adjusted PRACH transmit power ramp-up, a target power adjustment value corresponding to the PUCCH, the method further includes:

maintaining the PRACH transmit power ramp-up unchanged when the RRC setup message does not include the power configuration field; and
correspondingly, the determining, based on a preset PUCCH transmit power calculation formula, the value of the power configuration field, and the target power adjustment value, target transmit power corresponding to the PUCCH includes:
determining, based on the preset PUCCH transmit power calculation formula and the target power adjustment value, the target transmit power corresponding to the PUCCH.

Optionally, in yet another possible implementation of the first aspect, before the determining, based on an adjusted PRACH transmit power ramp-up, a target power adjustment value corresponding to the PUCCH, the method further includes:

obtaining a transmit power control (Transmit Power Control, TPC) instruction sent by the base station, where the TPC instruction includes a TPC power adjustment value corresponding to the PUCCH; and
correspondingly, the determining, based on an adjusted PRACH transmit power ramp-up, a target power adjustment value corresponding to the PUCCH includes:
determining a sum of the adjusted PRACH transmit power ramp-up and the TPC power adjustment value as the target power adjustment value.

According to a second aspect, an embodiment of this application provides an apparatus for controlling transmit power of a PUCCH. The apparatus includes: a first obtaining module, configured to obtain a PRACH transmit power ramp-up when random access between a UE and a base station succeeds; a second obtaining module, configured to obtain an RRC setup message sent by the base station; a first adjustment module, configured to adjust, when the RRC setup message includes a power configuration field corresponding to the PUCCH, the PRACH transmit power ramp-up based on the PRACH transmit power ramp-up and/or a value of the power configuration field; a first determining module, configured to determine, based on an adjusted PRACH transmit power ramp-up, a target power adjustment value corresponding to the PUCCH; and a second determining module, configured to determine, based on a preset PUCCH transmit power calculation formula, the value of the power configuration field, and the target power adjustment value, target transmit power corresponding to the PUCCH.

In a possible implementation of the second aspect, the first adjustment module includes:

a first adjustment unit, configured to set the PRACH transmit power ramp-up to 0 when the PRACH transmit power ramp-up is less than or equal to a first threshold; and
a second adjustment unit, configured to maintain the PRACH transmit power ramp-up unchanged when the PRACH transmit power ramp-up is greater than the first threshold.

Optionally, in another possible implementation of the second aspect, the first adjustment module includes:

a third adjustment unit, configured to set the PRACH transmit power ramp-up to 0 when the value of the power configuration field is greater than a second threshold; and
a fourth adjustment unit, configured to maintain the PRACH transmit power ramp-up unchanged when the value of the power configuration field is less than or equal to the second threshold.

Optionally, in still another possible implementation of the second aspect, the first adjustment module includes:

a fifth adjustment unit, configured to set the PRACH transmit power ramp-up to 0 when the PRACH transmit power ramp-up is less than or equal to a first threshold and the value of the power configuration field is greater than a second threshold; and
a sixth adjustment unit, configured to maintain the PRACH transmit power ramp-up unchanged when the PRACH transmit power ramp-up is greater than the first threshold or the value of the power configuration field is less than or equal to the second threshold.

Optionally, in yet another possible implementation of the second aspect, the first adjustment module includes:

a first determining unit, configured to determine a difference between the PRACH transmit power ramp-up and the value of the power configuration field;
a seventh adjustment unit, configured to set the PRACH transmit power ramp-up to 0 when the difference is less than or equal to a third threshold; and
an eighth adjustment unit, configured to maintain the PRACH transmit power ramp-up unchanged when the difference is greater than the third threshold.

Optionally, in yet another possible implementation of the second aspect, the first adjustment module includes:

a second determining unit, configured to determine initial transmit power corresponding to an initial PUCCH message, where the initial PUCCH message is a feedback message including a parsing result of the RRC setup message and sent by the UE to the base station through the PUCCH;

a ninth adjustment unit, configured to set the PRACH transmit power ramp-up to 0 when the initial transmit power is less than maximum transmit power corresponding to the UE; and

a tenth adjustment unit, configured to maintain the PRACH transmit power ramp-up unchanged when the initial transmit power is greater than or equal to the maximum transmit power.

Optionally, in yet another possible implementation of the second aspect, the second determining unit is specifically configured to:

determine, based on the preset PUCCH transmit power calculation formula and the PRACH transmit power ramp-up, the initial transmit power corresponding to the PUCCH.

Optionally, in another possible implementation of the second aspect, the first adjustment module includes:

a first determining unit, configured to determine a difference between the PRACH transmit power ramp-up and the value of the power configuration field;

a second determining unit, configured to determine, based on the preset PUCCH transmit power calculation formula and the PRACH transmit power ramp-up, initial transmit power corresponding to the PUCCH;

an eleventh adjustment unit, configured to set the PRACH transmit power ramp-up to 0 when the difference is less than or equal to a third threshold and the initial transmit power is less than maximum transmit power corresponding to the UE; and

a twelfth adjustment unit, configured to maintain the PRACH transmit power ramp-up unchanged when the difference is greater than the third threshold or the initial transmit power is greater than or equal to the maximum transmit power.

Optionally, in still another possible implementation of the second aspect, the apparatus further includes:

a second adjustment module, configured to maintain the PRACH transmit power ramp-up unchanged when the RRC setup message does not include the power configuration field; and

correspondingly, the second determining module includes:

a third determining unit, configured to determine, based on the preset PUCCH transmit power calculation formula and the target power adjustment value, the target transmit power corresponding to the PUCCH.

Optionally, in yet another possible implementation of the second aspect, the apparatus further includes:

a third obtaining module, configured to obtain a TPC instruction sent by the base station, where the TPC instruction includes a TPC power adjustment value corresponding to the PUCCH; and

correspondingly, the first determining module includes:

a fourth determining unit, configured to determine a sum of the adjusted PRACH transmit power ramp-up and the TPC power adjustment value as the target power adjustment value.

According to a third aspect, an embodiment of this application provides a UE. The UE includes: a memory, a processor, and a computer program stored in the memory and executable on the processor. When the processor executes the computer program, the foregoing method for controlling transmit power of a PUCCH is implemented.

According to a fourth aspect, an embodiment of this application provides a computer-readable storage medium, storing a computer program. When the computer program is executed by a processor, the foregoing method for controlling transmit power of a PUCCH is implemented.

According to a fifth aspect, an embodiment of this application provides a computer program product. When the computer program product runs on a UE, the UE performs the foregoing method for controlling transmit power of a PUCCH.

Beneficial effects brought by embodiments of this application compared with a conventional technology are: When a base station configures a power configuration field corresponding to the PUCCH in an RRC setup message, a PRACH transmit power ramp-up is flexibly adjusted based on the PRACH transmit power ramp-up during a random access and an actual value level of the power configuration field, so that when the transmit power of the PUCCH is subsequently determined, the transmit power of the PUCCH does not steeply decrease due to a change of the PRACH transmit power ramp-up, to ensure successful sending of information carried on the PUCCH. Therefore, congestion in uplink data transmission between the base station and a UE is avoided, and communication stability and smoothness of a system are improved.

**BRIEF DESCRIPTION OF DRAWINGS**

To describe the technical solutions in embodiments of this application more clearly, the following briefly describes the accompanying drawings required for describing the embodiments or a conventional technology. It is clear that the accompanying drawings in the following descriptions show only some embodiments of this application, and a person of ordinary skill in the art may still derive other drawings from these accompanying drawings without creative efforts.

FIG. 1 is a schematic flowchart of a method for controlling transmit power of a PUCCH according to an embodiment of this application;
FIG. 2 is another schematic flowchart of a method for controlling transmit power of a PUCCH according to an embodiment of this application;
FIG. 3 is a schematic structural diagram of an apparatus for controlling transmit power of a PUCCH according to an embodiment of this application; and
FIG. 4 is a schematic structural diagram of a UE according to an embodiment of this application.

## DESCRIPTION OF EMBODIMENTS

In the following descriptions, for description rather than limitation, specific details such as particular system structures and technologies are provided to facilitate thorough understanding of embodiments of this application. However, it should be clear to a person skilled in the art that this application may also be implemented in other embodiments without these specific details. In other cases, detailed descriptions of well-known systems, apparatuses, circuits, and methods are omitted, so that description of this application is not obstructed by unnecessary details.

It should be understood that, when used in the specification of this application and the appended claims, the term "include/comprise" indicates the presence of described features, integers, steps, operations, elements, and/or components, but does not exclude the presence or addition of one or more other features, integers, steps, operations, elements, components, and/or groups thereof.

It should be further understood that the term "and/or" used in the specification of this application and the appended claims refers to any and all possible combinations of one or more of the associated listed items, and includes these combinations.

As used in the specification of this application and the appended claims, the term "if" may be interpreted based on the context as "when...", "once", "in response to determining", or "in response to detecting". Similarly, the phrase "if determining" or "if detecting (a described condition or event)" may be interpreted based on the context as a meaning of "once determining", "in response to determining", "once detecting (the described condition or event)", or "in response to detecting (the described condition or event)".

In addition, in descriptions of the specification of this application and the appended claims, the terms such as "first", "second", and "third" are merely used for distinguishing descriptions, and cannot be understood as an indication or implication of relative importance.

Reference to "one embodiment" or "some embodiments" described in the specification of this application means that a specific feature, structure or characteristic described in combination with this embodiment is included in one or more embodiments of this application. Therefore, phrases "in one embodiment", "in some embodiments", "in some other embodiments", "in some additional embodiments", and the like described in different places in this specification do not mean that all necessarily refer to the same embodiment, but mean "one or more but not all of embodiments", unless otherwise specifically emphasized. The terms "include", "contain", "have" and their variations all mean "including but not limited to", unless otherwise specifically emphasized.

The following describes, with reference to the accompanying drawings, a method and an apparatus for controlling transmit power of a PUCCH, a UE, a storage medium, and a computer program provided in this application in detail.

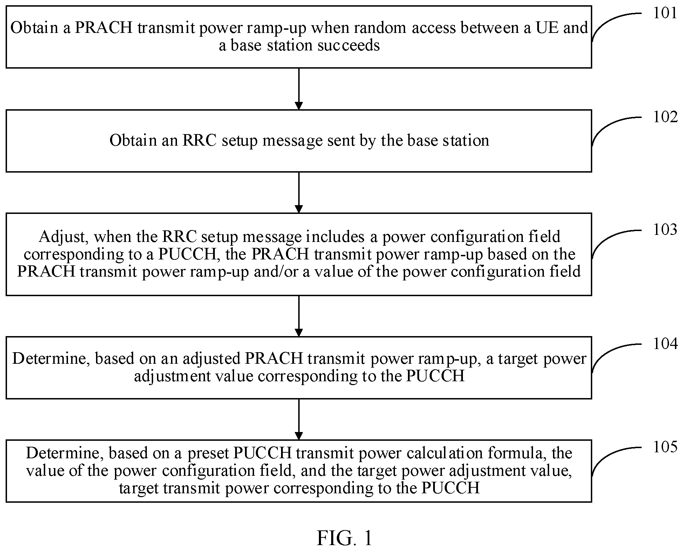

FIG. 1 is a schematic flowchart of a method for controlling transmit power of a PUCCH according to an embodiment of this application.

Step 101: Obtain a PRACH transmit power ramp-up when random access between a UE and a base station succeeds.

It should be noted that, the method for controlling the transmit power of the PUCCH in embodiments of this application may be performed by an apparatus for controlling the transmit power of the PUCCH in the embodiments of this application. The apparatus for controlling the transmit power of the PUCCH in the embodiments of this application may be configured in any UE, to perform the method for controlling the transmit power of the PUCCH in the embodiments of this application. For example, the apparatus for controlling the transmit power of the PUCCH in the embodiments of this application may be configured in a UE such as a mobile phone, a computer, or a wearable device, to control the transmit power of the PUCCH during communication between the UE and the base station.

The PRACH transmit power ramp-up may refer to a total adjustment amount of transmit power of a PRACH during the random access between the UE and the base station.

In this embodiment of this application, during the random access to the base station, the UE continuously adjusts the transmit power of the PRACH based on RSRP of a current environment until the random access succeeds. When the RSRP of the current environment is poor, the UE may continuously increase the transmit power of the PRACH, so that the base station can successfully receive a message sent by the UE through the PRACH. During each time of random access, the UE may gradually ramp up the transmit power of the PRACH based on a power ramping step (for example, may be denoted as powerRampingStep) configured in a SIB1 in the base station. In other words, after each random access failure, the UE may ramp up the transmit power of the PRACH by one powerRampingStep and then retry until the random access between the UE and the base station succeeds. After the random access between the UE and the base station succeeds, the PRACH transmit power ramp-up (for example, may be denoted as PowerRamp-up) may be determined based on a quantity of times for which the UE retries and the powerRampingStep, that is, PowerRamp-up=N×powerRampingStep, where N is a quantity of times for which the UE retries on the PRACH during the random access.

Step 102: Obtain an RRC setup message sent by the base station.

In this embodiment of this application, the UE may send a random access preamble through the PRACH channel. After receiving the random access preamble, the base station may allocate an uplink resource to the UE. Then, the UE may send an RRC connection request (RRC Connection Request) message on a physical uplink shared channel (Physical Uplink Shared Channel, PUSCH), to set up an RRC connection. After obtaining the RRC Connection Request message, the base station may send the RRC setup (Setup) message to the UE, and may configure the transmit power of the PUCCH in the RRC Setup message according to a communication protocol with the UE, so that the UE can determine the transmit power of the PUCCH based on a configuration in the RRC Setup.

Step 103: Adjust, when the RRC setup message includes a power configuration field corresponding to the PUCCH, the PRACH transmit power ramp-up based on the PRACH transmit power ramp-up and/or a value of the power configuration field.

The power configuration field corresponding to the PUCCH may refer to a field that is preset in the communication protocol between the UE and the base station and that is for configuring a power adjustment value of the PUCCH.

It should be noted that, based on the communication protocol with the UE and actual communication quality with the UE, the base station may determine whether to configure the power configuration field corresponding to the PUCCH in the RRC Setup message, and determine the specific value of the power configuration field. In addition, a value range of the power configuration field may be set in the communication protocol. The base station may configure the value of the power configuration field from the value range of the power configuration field based on the actual communication quality with the UE.

For example, the value range of the power configuration field may be (-16 dB, 15 dB). During actual use, the value range of the power configuration field may be configured according to actual requirements and specific application scenarios. This is not limited in this embodiment of this application.

In this embodiment of this application, the PRACH transmit power ramp-up PowerRamp-up is an amplitude by which the transmit power of the PRACH channel is increased based on an actual RSRP level during the random access. In other words, after the transmit power of the PRACH channel is increased by PowerRamp-up, the base station can successfully obtain random access information sent by the UE through the PRACH. Therefore, during power control performed on the PUCCH, the transmit power of the PUCCH may be directly increased by PowerRamp-up. In this way, a good communication effect can be achieved when the UE sends a message to the base station through the PUCCH for the first time, so that the base station can receive information sent by the UE through the PUCCH. However, if the base station configures the power configuration field (which may be denoted as p0-PUCCH-Value) corresponding to the PUCCH in the RRC Setup message, the UE directly sets PowerRamp-up to 0. Consequently, when power control is performed on the PUCCH by using PowerRamp-up, the transmit power of the PUCCH decreases steeply. As a result, communication quality of the PUCCH is reduced.

Therefore, after obtaining the RRC Setup message sent by the base station, the UE may parse the obtained RRC Setup message, to determine whether the RRC Setup message includes the p0-PUCCH-Value field. When the RRC Setup message includes configuration information of the p0-PUCCH-Value field, the UE may determine, based on the value of PowerRamp-up and/or the value of p0-PUCCH-Value, whether the power of the PUCCH is to decrease steeply after PowerRamp-up is set to 0. The UE determines, based on a determining result, whether PowerRamp-up needs to be adjusted to ensure the communication quality of the PUCCH.

In a possible implementation, during the power control performed on the PUCCH, the transmit power corresponding to the PUCCH may be determined by using the following formulas:

$$P_{\text{PUCCH},b,f,c}(i,q_u,q_d,l) =$$

$$min\left\{\begin{array}{c} P_{\text{CMX},f,c}(i), \\ P_{\text{O\_PUCCH},b,f,c}(q_u) + 10log_{10}(2^\mu \cdot M_{\text{RB},b,f,c}^{\text{PUCCH}}(i) + PL_{b,f,c}(q_d) + \Delta_{\text{F\_PUCCH}}(F) + \Delta_{\text{TF},b,f,c}(i) + g_{b,f,c}(0)) \end{array}\right\}$$

$$(1)$$

$$P_{\text{O\_PUCCH},b,f,c}(q_u) = P_{\text{O\_NOMINAL\_PUCCH}} + P_{\text{O\_UE\_PUCCH}}(q_u) \quad (2)$$

$$g_{b,f,c}(0) = \Delta P_{rampup,b,f,c} + \delta_{b,f,c} \quad (3)$$

$P_{\text{CMX},f,c}(i)$ indicates maximum transmit power of the UE. $P_{\text{O\_NOMINAL\_PUCCH}}$ indicates initial power of the PUCCH, which may be configured by the base station in the SIB1. If the initial power of the PUCCH is not configured, a value of $P_{\text{O\_NOMINAL\_PUCCH}}$ is 0. $P_{\text{O\_UE\_PUCCH}}(q_u)$ indicates the value of the power configuration field (p0-PUCCH-Value field) corresponding to the PUCCH of the UE. If the power configuration field is not configured in the RRC Setup message, the value of $P_{\text{O\_UE\_PUCCH}}(q_u)$ is 0. $M_{\text{RB},b,f,c}^{\text{PUCCH}}(i)$ indicates a bandwidth for resource allocation of the UE on the PUCCH. $PL_{b,f,c}(q_d)$ indicates downlink path loss estimation corresponding to the UE, in decibels (dB). $\Delta_{\text{F\_PUCCH}}(F)$ indicates a value corresponding to a PUCCH format field, which may be preconfigured. The PUCCH format field may include fields such as a PUCCH format 0, a PUCCH format 1, a PUCCH format 2, a PUCCH format 3, and a PUCCH format 4. If the PUCCH format field is not configured, a value of $\Delta_{\text{F\_PUCCH}}(F)$ is 0. $\Delta_{\text{TF},b,f,c}(i)$ is related to a quantity of symbols corresponding to the PUCCH format and a length of information that needs to be sent currently on the PUCCH. $g_{b,f,c}(0)$ indicates the power adjustment value corresponding to the PUCCH. $\Delta P_{rampup,b,f,c}$ indicates the PRACH transmit power ramp-up PowerRamp-up. $\delta_{b,f,c}$ may indicate a power adjustment value corresponding to the PUCCH and configured by the base station in a TPC instruction. i indicates a sending moment of the PUCCH. $q_u$ indicates an index of selected $P_{\text{O\_UE\_PUCCH}}$ in p0-Set. $q_d$ indicates a resource index of a reference signal (Reference Signal, RS) for calculation of $PL_{b,f,c}(q_d)$. l indicates a power adjustment state of the PUCCH. $\mu$ indicates a subcarrier spacing (Subcarrier Spacing, SCS) configuration of the PUCCH.

It should be noted that, the UE may receive a specific downlink cell reference signal (Cell Reference Signal, CRS) sent by the base station, and calculate the downlink path loss estimation $PL_{b,f,c}(q_d)$ in the foregoing formula based on the received CRS. A calculation formula of $PL_{b,f,c}(q_d)$ is as follows:

$$PL_{b,f,c}(q_d) = P_{\text{t,CRS}} - P_{\text{r,CRS}}$$

$P_{\text{t,CRS}}$ is transmit power of the CRS, and is delivered by the base station to the UE. $P_{\text{r,CRS}}$ is receive power of the CRS.

It should be noted that, in the solutions in the embodiments of this application, only manners of determining the parameters $P_{\text{O-UE-PUCCH}}(q_u)$, $g_{b,f,c}(0)$, and $\Delta P_{rampup,b,f,c}$ in the foregoing formulas are concerned, and the other parameters in the formulas may be determined based on a configuration in the communication protocol.

It should be noted that, it can be learned from the foregoing formulas that, when the base station configures the p0-PUCCH-Value field in the RRC Setup message, if PowerRamp-up is directly set to 0, the transmit power of the PUCCH determined by using the foregoing formulas changes. Particularly, when PowerRamp-up is large, the transmit power of the PUCCH decreases steeply. As a result, the communication quality of the PUCCH is affected, and congestion in uplink data transmission is caused. Therefore, in this embodiment of this application, when the base station configures the p0-PUCCH-Value field in the RRC Setup message, whether the transmit power of the PUCCH is to decrease steeply after PowerRamp-up is set to 0 may be specifically determined based on the value of PowerRamp-up and the value of p0-PUCCH-Value, and then PowerRamp-up is adjusted, to ensure the communication quality of the PUCCH, avoid the congestion in the uplink data transmission, and improve communication stability and smoothness of a system.

In a possible implementation, when PowerRamp-up is large, setting PowerRamp-up to 0 more easily causes steep decreasing of the transmit power of the PUCCH. Therefore, a manner of adjusting PowerRamp-up may be determined based on the value of PowerRamp-up. To be specific, in a possible implementation of this embodiment of this application, the foregoing step 103 may include:

setting the PRACH transmit power ramp-up to 0 if the PRACH transmit power ramp-up is less than or equal to a first threshold; or

maintaining the PRACH transmit power ramp-up unchanged if the PRACH transmit power ramp-up is greater than the first threshold.

In this embodiment of this application, if the PRACH transmit power ramp-up PowerRamp-up is less than or equal to the first threshold, it may be determined that PowerRamp-up is small. Even if PowerRamp-up is set to 0, the transmit power of the PUCCH does not decrease steeply. Therefore, when the p0-PUCCH-Value field is configured in the RRC Setup message, PowerRamp-up may be set to 0. If PowerRamp-up is greater than the first threshold, it may be determined that PowerRamp-up is large. If PowerRamp-up is set to 0, the transmit power of the PUCCH decreases steeply. Therefore, PowerRamp-up may be maintained unchanged to prevent the transmit power of the PUCCH from decreasing steeply.

It should be noted that, during actual use, a specific value of the first threshold may be determined according to actual requirements and specific application scenarios. This is not limited in this embodiment of this application. For example, the first threshold may be 15 dB.

In a possible implementation, it can be learned from the foregoing formulas that, when the p0-PUCCH-Value field is configured in the RRC Setup message, the value of $P_{O\_UE\_PUCCH}(q_u)$ changes from 0 to the value of p0-PUCCH-Value. Therefore, when the value of p0-PUCCH-Value is larger, a probability that the transmit power of the PUCCH decreases steeply after PowerRamp-up is set to 0 is lower. Therefore, the manner of adjusting PowerRamp-up may alternatively be determined based on the value of p0-PUCCH-Value. To be specific, in a possible implementation of this embodiment of this application, the foregoing step 103 may include:

setting the PRACH transmit power ramp-up to 0 if the value of the power configuration field is greater than a second threshold; or
maintaining the PRACH transmit power ramp-up unchanged if the value of the power configuration field is less than or equal to the second threshold.

In this embodiment of this application, if the value of the power configuration field p0-PUCCH-Value is greater than the second threshold, it may be determined that the value of p0-PUCCH-Value is large. To be specific, even if the PRACH transmit power ramp-up PowerRamp-up is set to 0, the transmit power of the PUCCH may be compensated to a certain extent by using the value of p0-PUCCH-Value, so that the transmit power of the PUCCH does not decrease steeply when PowerRamp-up is set to 0. Therefore, when the value of p0-PUCCH-Value is large, PowerRamp-up may be set to 0. If the value of p0-PUCCH-Value is less than or equal to the second threshold, it may be determined that the value of p0-PUCCH-Value is small. To be specific, after PowerRamp-up is set to 0 and the value of p0-PUCCH-Value is substituted into the foregoing formulas, not only is the transmit power of the PUCCH not compensated, but also the transmit power of the PUCCH may be further reduced. Therefore, PowerRamp-up may be maintained unchanged to prevent the transmit power of the PUCCH from decreasing steeply.

It should be noted that, during actual use, a specific value of the second threshold may be set according to actual requirements and specific application scenarios and with reference to the value range of p0-PUCCH-Value configured in the communication protocol. This is not limited in this embodiment of this application. For example, the second threshold may be 0.

In a possible implementation, when the p0-PUCCH-Value field is configured in the RRC Setup message, when the transmit power of the PUCCH is calculated by using the foregoing formulas, $P_{O\_UE\_PUCCH}(q_u)$ in the formula (2) is modified to the value of p0-PUCCH-Value, and $\Delta P_{rampup,b,f,c}$ in the formula (3) is set to 0. Therefore, an amount of change of the transmit power of the PUCCH before and after the p0-PUCCH-Value field is configured is related to both the value of p0-PUCCH-Value and the value of PowerRamp-up. Therefore, the manner of adjusting PowerRamp-up may be determined based on both the value of p0-PUCCH-Value and the value of PowerRamp-up, to further improve accuracy of power control performed on the PUCCH. To be specific, in a possible implementation of this embodiment of this application, the foregoing step 103 may include:

setting the PRACH transmit power ramp-up to 0 if the PRACH transmit power ramp-up is less than or equal to a first threshold and the value of the power configuration field is greater than a second threshold; or
maintaining the PRACH transmit power ramp-up unchanged if the PRACH transmit power ramp-up is greater than the first threshold or the value of the power configuration field is less than or equal to the second threshold.

In this embodiment of this application, if the PRACH transmit power ramp-up PowerRamp-up is less than or equal to the first threshold and the value of the power configuration field p0-PUCCH-Value is greater than the second threshold, it may be determined that PowerRamp-up is small and the value of p0-PUCCH-Value is large. Therefore, in this case, setting PowerRamp-up to 0 does not easily cause steep decreasing of the transmit power of the PUCCH. In addition, after the value of p0-PUCCH-Value is substituted into the foregoing formulas, the transmit power of the PUCCH may be compensated well by using the value of p0-PUCCH-Value, so that the probability that the transmit power of the PUCCH decreases steeply is further reduced. Therefore, in this case, PowerRamp-up may be set to 0.

Correspondingly, if PowerRamp-up is greater than the first threshold or the value of p0-PUCCH-Value is less than or equal to the second threshold, it may be determined that PowerRamp-up is large, or the value of p0-PUCCH-Value is small. To be specific, in this case, if PowerRamp-up is set to 0, the transmit power of the PUCCH probably decreases steeply, and the transmit power of the PUCCH cannot be effectively compensated by using the value of p0-PUCCH-Value. Therefore, PowerRamp-up may be maintained unchanged to prevent the transmit power of the PUCCH from decreasing steeply.

It should be noted that, during actual use, specific values of the first threshold and the second threshold may be set according to actual requirements and specific application scenarios and with reference to the value range of p0-PUCCH-Value configured in the communication protocol. This is not limited in this embodiment of this application. For example, when the value range of p0-PUCCH-Value is (-16 dB, 15 dB), the first threshold may be 15 dB, and the second threshold may be 0.

In a possible implementation, when the p0-PUCCH-Value field is not configured in the RRC Setup message, in the foregoing formulas, $P_{O\_UE\_PUCCH}(q_u)$ is 0, $\Delta P_{rampup,b,f,c}$ is PowerRamp-up. However, after the p0-PUCCH-Value field is configured in the RRC Setup message, and PowerRamp-up is set to 0, in the foregoing formulas, $P_{O\_UE\_PUCCH}(q_u)$ is the value of p0-PUCCH-Value, and $\Delta P_{rampup,b,f,c}$ is 0. Therefore, an amount of change of the transmit power of the PUCCH before and after the p0-PUCCH-Value field is configured is a difference between PowerRamp-up and p0-PUCCH-Value. Therefore, the difference between PowerRamp-up and p0-PUCCH-Value may reflect whether the transmit power of the PUCCH is to decrease steeply. Therefore, the manner of adjusting PowerRamp-up may be determined based on the difference between PowerRamp-up and p0-PUCCH-Value, to further improve accuracy of power control performed on the PUCCH. To be specific, in a possible implementation of this embodiment of this application, the foregoing step 103 may include:

    determining a difference between the PRACH transmit power ramp-up and the value of the power configuration field; and
    setting the PRACH transmit power ramp-up to 0 if the difference is less than or equal to a third threshold; or
    maintaining the PRACH transmit power ramp-up unchanged if the difference is greater than the third threshold.

In this embodiment of this application, if it is determined that the difference between the PRACH transmit power ramp-up PowerRamp-up and the value of the power configuration field p0-PUCCH-Value is less than or equal to the third threshold, it may be determined that the difference between PowerRamp-up and the value of p0-PUCCH-Value is small. Therefore, even if the value of p0-PUCCH-Value is configured and PowerRamp-up is set to 0, the transmit power of the PUCCH does not fluctuate greatly before and after the configuration, so that steep decreasing does not occur. Therefore, in this case, PowerRamp-up may be set to 0. If the difference between PowerRamp-up and the value of p0-PUCCH-Value is greater than the third threshold, it may be determined that the difference between PowerRamp-up and the value of p0-PUCCH-Value is large. Therefore, after the value of p0-PUCCH-Value is configured and PowerRamp-up is set to 0, the transmit power of the PUCCH fluctuates greatly before and after the configuration, so that steep decreasing may occur. Therefore, in this case, PowerRamp-up may be maintained unchanged.

It should be noted that, during actual use, a specific value of the third threshold may be determined according to actual requirements and specific application scenarios. This is not limited in this embodiment of this application. For example, the third threshold may be 5 dB.

In a possible implementation, if the transmit power of the PUCCH determined based on PowerRamp-up is large before the p0-PUCCH-Value field is configured, it indicates that the transmit power of the PUCCH needs to be increased by a large amplitude to ensure normal communication of the PUCCH. In this case, if PowerRamp-up is still set to 0, the transmit power of the PUCCH decreases steeply, and the communication quality of the PUCCH is affected. To be specific, in a possible implementation of this embodiment of this application, the foregoing step 103 may include:

    determining initial transmit power corresponding to an initial PUCCH message, where the initial PUCCH message is a feedback message including a parsing result of the RRC setup message and sent by the UE to the base station through the PUCCH; and
    setting the PRACH transmit power ramp-up to 0 if the initial transmit power is less than maximum transmit power corresponding to the UE; or
    maintaining the PRACH transmit power ramp-up unchanged if the initial transmit power is greater than or equal to the maximum transmit power.

In this embodiment of this application, after receiving the RRC Setup message sent by the base station, the UE may parse the RRC Setup message, and feed back the parsing result to the base station through the PUCCH. A message including the parsing result of the RRC Setup message is the initial PUCCH message. The initial PUCCH message carries the parsing result of whether the RRC Setup message is successfully parsed. For example, if the parsing result is that parsing succeeds, data carried in the initial PUCCH message may be "ACK". If the parsing result is that parsing fails, data carried in the initial PUCCH message may be "NACK". Therefore, after the UE complete parsing the RRC Setup message and feeds back the parsing result through the PUCCH, transmit power of the feedback message (namely, transmit power of the initial PUCCH message) may be obtained, and the transmit power is determined as the initial transmit power.

In a possible implementation of this embodiment of this application, if it is determined that the initial transmit power is greater than or equal to the maximum transmit power corresponding to the UE, it indicates that signal quality between the UE and the base station is poor currently, and the PRACH transmit power ramp-up PowerRamp-up is large. To be specific, when the initial transmit power of the initial PUCCH is determined, the transmit power of the PUCCH is greatly compensated by using PowerRamp-up, and the maximum transmit power of the UE is reached. Therefore, in this case, setting PowerRamp-up to 0 not only causes steep decreasing of the transmit power of the PUCCH, but also severely affects uplink communication quality. Therefore, when the initial transmit power is greater than or equal to the maximum transmit power, PowerRamp-up may be maintained unchanged. If the initial transmit power is less than the maximum transmit power corresponding to the UE, it may indicate that signal quality between the UE and the base station is good currently, and PowerRamp-up is not excessively large. Therefore, even if PowerRamp-up is set to 0, the transmit power of the PUCCH may not decrease steeply. Therefore, in this case, PowerRamp-up may be set to 0.

Further, when the initial PUCCH message is sent, PowerRamp-up has not been adjusted based on a configuration status of the p0-PUCCH-Value field in the RRC Setup message. Therefore, the initial transmit power corresponding to the initial PUCCH may be directly determined based on PowerRamp-up determined during the random access. To be specific, in a possible implementation of this embodiment of this application, the determining initial transmit power corresponding to an initial PUCCH message may include:

determining, based on the preset PUCCH transmit power calculation formula and the PRACH transmit power ramp-up, the initial transmit power corresponding to the PUCCH.

The preset PUCCH transmit power calculation formula may be the foregoing formulas (1), (2), and (3).

In this embodiment of this application, the initial PUCCH message is used to feed back the parsing result of the UE for the RRC Setup message. In this case, whether the RRC Setup message includes the p0-PUCCH-Value field has not been determined, and PowerRamp-up has not been adjusted. Therefore, the PRACH transmit power ramp-up PowerRamp-up determined during the random access may be directly substituted into the preset PUCCH transmit power calculation formula as $g_{b,f,c}(0)$, $P_{O\_UE\_PUCCH}(q_u)$ is determined as 0, and other parameters in the preset PUCCH transmit power calculation formula are determined based on other configurations in the communication protocol, to determine the initial transmit power corresponding to the initial PUCCH.

In a possible implementation, an excessively large difference between PowerRamp-up and the value of p0-PUCCH-Value or excessively large initial transmit power of the PUCCH causes steep decreasing of the transmit power of the PUCCH after PowerRamp-up is set to 0. Therefore, the manner of adjusting PowerRamp-up may be determined in combination with data in the two aspects, to further improve accuracy and reliability of power control performed on the PUCCH. To be specific, in a possible implementation of this embodiment of this application, the foregoing step 103 may include:

determining a difference between the PRACH transmit power ramp-up and the value of the power configuration field;
determining initial transmit power corresponding to an initial PUCCH message, where the initial PUCCH message is a feedback message including a parsing result of the RRC setup message and sent by the UE to the base station through the PUCCH; and
setting the PRACH transmit power ramp-up to 0 if the difference is less than or equal to a third threshold and the initial transmit power is less than maximum transmit power corresponding to the UE; or
maintaining the PRACH transmit power ramp-up unchanged if the difference is greater than the third threshold or the initial transmit power is greater than or equal to the maximum transmit power.

In this embodiment of this application, when the difference between the PRACH transmit power ramp-up PowerRamp-up and the value of the power configuration field p0-PUCCH-Value is greater than the third threshold, or when the initial transmit power is greater than or equal to the maximum transmit power, setting PowerRamp-up to 0 causes steep decreasing of the transmit power of the PUCCH. Therefore, in both cases, PowerRamp-up may be maintained unchanged. In addition, when the difference between PowerRamp-up and the value of the p0-PUCCH-Value field is less than or equal to the third threshold and the initial transmit power is less than the maximum transmit power corresponding to the UE, it may be determined that the transmit power of the PUCCH does not decrease steeply after PowerRamp-up is set to 0. Therefore, PowerRamp-up may be set to 0.

It should be noted that, during actual use, whether the PRACH transmit power ramp-up needs to be adjusted may be determined in any one of the manners disclosed in the embodiments of this application. This is not limited in the embodiments of this application.

Step 104: Determine, based on an adjusted PRACH transmit power ramp-up, a target power adjustment value corresponding to the PUCCH.

The target power adjustment value may refer to an amplitude by which the transmit power of the PUCCH is adjusted. For example, when the transmit power of the PUCCH is determined by using the foregoing formulas (1), (2), and (3), the target power adjustment value may be $g_{b,f,c}(0)$ in the formula (1).

It should be noted that, if the PRACH transmit power ramp-up is set to 0 in step 103, the adjusted PRACH transmit power ramp-up is 0. If the PRACH transmit power ramp-up is maintained unchanged in step 103, the adjusted PRACH transmit power ramp-up is still the PRACH transmit power ramp-up determined during the random access.

In a possible implementation, when the TPC instruction sent by the base station is not obtained, the adjusted PRACH transmit power ramp-up may be directly determined as the target power adjustment value corresponding to the PUCCH. For example, when the transmit power of the PUCCH is determined by using the foregoing formulas (1), (2), and (3), the adjusted PRACH transmit power ramp-up may be directly determined as $\Delta P_{rampup,b,f,c}$, and the target power adjustment value $g_{b,f,c}(0) = \Delta P_{rampup,b,f,c}$ is determined.

Further, when the power configuration field corresponding to the PUCCH is not configured in the RRC Setup message, the PRACH transmit power ramp-up may be maintained unchanged. To be specific, in a possible implementation of this embodiment of this application, before the foregoing step 104, the method may include:

maintaining the PRACH transmit power ramp-up unchanged when the RRC setup message does not include the power configuration field.

Step 105: Determine, based on the preset PUCCH transmit power calculation formula, the value of the power configuration field, and the target power adjustment value, target transmit power corresponding to the PUCCH.

The preset PUCCH transmit power calculation formula may be the foregoing formulas (1), (2), and (3).

In this embodiment of this application, the value of the power configuration field p0-PUCCH-Value may be substituted into the preset PUCCH transmit power calculation formula as $P_{O\_UE\_PUCCH}(q_u)$, the target power adjustment value determined in the foregoing steps may be substituted into the preset PUCCH transmit power calculation formula as $g_{b,f,c}(0)$, and other parameters in the preset PUCCH transmit power calculation formula are determined based on a configuration in the communication protocol, to determine the target transmit power corresponding to the PUCCH. Then, the UE may send a resource scheduling request (Scheduling request, SR) to the base station on the PUCCH at the target transmit power.

Further, when the power configuration field corresponding to the PUCCH is not configured in the RRC Setup message, $P_{O\_UE\_PUCCH}(q_u)$ in the preset PUCCH transmit power calculation formula may be set to 0, to determine the target transmit power corresponding to the PUCCH. To be specific, in a possible implementation of this embodiment of this application, the foregoing step 105 may include:

determining, based on the preset PUCCH transmit power calculation formula and the target power adjustment value when the RRC setup message does not include the power configuration field, the target transmit power corresponding to the PUCCH.

In this embodiment of this application, when the RRC setup message does not include the power configuration field, $P_{O\_UE\_PUCCH}(q_u)$ in the preset PUCCH transmit power calculation formula may be determined as 0, the target power adjustment value determined in the foregoing steps may be substituted into the preset PUCCH transmit power calculation formula as $g_{b,f,c}(0)$, and other parameters in the preset PUCCH transmit power calculation formula are determined based on a configuration in the communication protocol, to determine the target transmit power corresponding to the PUCCH. Then, the UE may send an SR to the base station on the PUCCH at the target transmit power.

In the method for controlling the transmit power of the PUCCH in this embodiment of this application, the PRACH transmit power ramp-up when the random access between the user equipment UE and the base station succeeds is obtained. When the RRC setup message sent by the base station includes the power configuration field corresponding to the PUCCH, the PRACH transmit power ramp-up is adjusted based on the PRACH transmit power ramp-up and/or the value of the power configuration field. Then, the target power adjustment value corresponding to the PUCCH is determined based on the adjusted PRACH transmit power ramp-up. Then, the target transmit power corresponding to the PUCCH is determined based on the preset PUCCH transmit power calculation formula, the value of the power configuration field, and the target power adjustment value. In this way, when the base station configures the power configuration field corresponding to the PUCCH in the RRC setup message, the PRACH transmit power ramp-up is flexibly adjusted based on the PRACH transmit power ramp-up during the random access and an actual value level of the power configuration field, so that when the transmit power of the PUCCH is subsequently determined, the transmit power of the PUCCH does not decrease steeply due to a change of the PRACH transmit power ramp-up, to ensure successful sending of information carried on the PUCCH. Therefore, congestion in uplink data transmission between the base station and the UE is avoided, and communication stability and smoothness of a system are improved.

In a possible implementation of this application, after obtaining a PUCCH signal sent by the UE, the base station may further send a TPC instruction to the UE based on a signal-to-noise ratio of the received PUCCH signal, so that the UE further adjusts the transmit power of the PUCCH based on a power adjustment value in the TPC instruction, to further improve the accuracy and reliability of the power control performed on the PUCCH.

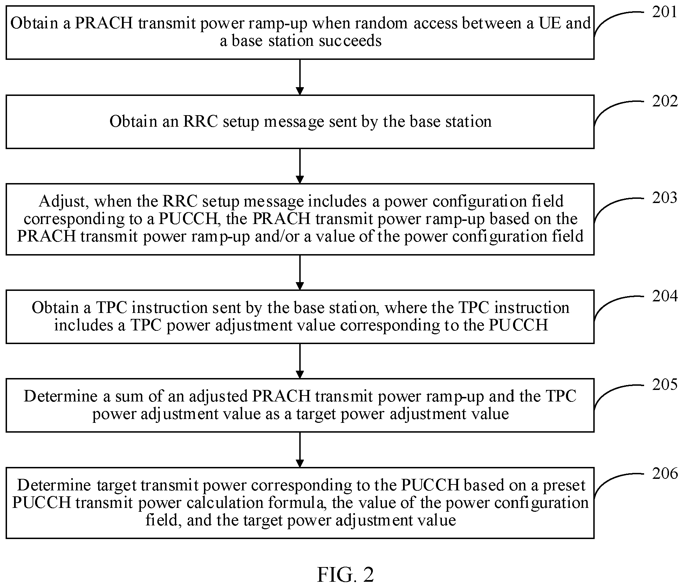

With reference to FIG. 2, the following further describes a method for controlling transmit power of a PUCCH according to an embodiment of this application.

FIG. 2 is another schematic flowchart of a method for controlling transmit power of a PUCCH according to an embodiment of this application.

As shown in FIG. 2, the method for controlling the transmit power of the PUCCH includes the following steps.

Step 201: Obtain a PRACH transmit power ramp-up when random access between a UE and a base station succeeds.

Step 202: Obtain an RRC setup message sent by the base station.

Step 203: Adjust, when the RRC setup message includes a power configuration field corresponding to the PUCCH, the PRACH transmit power ramp-up based on the PRACH transmit power ramp-up and/or a value of the power configuration field.

For specific implementation processes and principles of the foregoing steps 201 to 203, refer to the detailed descriptions in the foregoing embodiment. Details are not described herein again.

Step 204: Obtain a TPC instruction sent by the base station, where the TPC instruction includes a TPC power adjustment value corresponding to the PUCCH.

In this embodiment of this application, after determining the adjusted transmit power ramp-up in the manner in the foregoing embodiment, the UE may first determine the transmit power of the PUCCH based on the adjusted transmit power ramp-up and the value of the power configuration field, and send a message to the base station through the PUCCH at the transmit power. Then, after receiving a PUCCH signal sent by the UE, the base station may determine, based on a difference between a signal-to-noise ratio of the received PUCCH signal and a set target signal-to-noise ratio, whether the transmit power of the PUCCH needs to be further adjusted. When determining that the transmit power of the PUCCH needs to be further adjusted, the base station sets the corresponding TPC power adjustment value in the TPC instruction, and sends the TPC instruction to the UE. After obtaining the TPC instruction sent by the base station, the UE may further finely adjust the transmit power of the PUCCH based on the TPC power adjustment value included in the TPC instruction, to further improve communication quality of the PUCCH.

It should be noted that, each time the base station obtains a PUCCH signal sent by the UE, the base station may send a TPC instruction to the UE based on a difference between a signal-to-noise ratio of the PUCCH signal and the target signal-to-noise ratio. For example, after receiving an initial PUCCH message (a message carrying a parsing result for the RRC Setup) sent by the UE, the base station may determine a TPC adjustment value based on a difference between a signal-to-noise ratio of the initial PUCCH message and the target signal-to-noise ratio, and send a TPC instruction to the UE. Alternatively, after receiving an SR message sent by the UE to the base station through the PUCCH, the base station may determine a TPC adjustment value based on a difference between a signal-to-noise ratio of the SR message and the target signal-to-noise ratio, and send a TPC instruction to the UE.

In a possible implementation, if the base station determines that the signal-to-noise ratio of the received PUCCH is less than the target signal-to-noise ratio, the base station may determine that communication quality of the PUCCH is not ideal currently and the transmit power of the PUCCH needs to be further ramped up. Therefore, the base station may determine the difference (where the difference is greater than 0) between the target signal-to-noise ratio and the signal-to-noise ratio of the received PUCCH signal as the TPC power adjustment value, so that the UE can further ramp up the transmit power of the PUCCH based on the TPC power adjustment value. If the base station determines that the signal-to-noise ratio of the received PUCCH is greater than the target signal-to-noise ratio, the base station may determine that communication quality of the PUCCH is good currently and the transmit power of the PUCCH can be properly decreased, to reduce power consumption of the UE. Therefore, the base station may determine the difference (where the difference is less than 0) between the target signal-to-noise ratio and the signal-to-noise ratio of the received PUCCH signal as the TPC power adjustment value, so that the UE can properly decrease the transmit power of the PUCCH based on the TPC power adjustment value. The signal-to-noise ratio used by the base station to determine the TPC power adjustment value may be a signal noise ratio (Signal Noise Ratio, SNR) or a signal to interference plus noise ratio (Signal to Interference plus Noise Ratio, SINR). This is not limited in this embodiment of this application.

Step 205: Determine a sum of the adjusted PRACH transmit power ramp-up and the TPC power adjustment value as a target power adjustment value.

In this embodiment of this application, when the foregoing formulas (1), (2), and (3) are used as preset PUCCH transmit power calculation formulas, the adjusted PRACH transmit power ramp-up may be substituted into the formula (3) as $\Delta P_{rampup,b,f,c}$, and the TPC power adjustment value may be substituted into the formula (3) as $\delta_{b,f,c}$, to determine the target power adjustment value $g_{b,f,c}(0)$. That is, the sum of the adjusted PRACH transmit power ramp-up and the TPC power adjustment value may be determined as the target power adjustment value.

Step 206: Determine, based on the preset PUCCH transmit power calculation formula, the value of the power configuration field, and the target power adjustment value, target transmit power corresponding to the PUCCH.

For a specific implementation process and a principle of the foregoing step 206, refer to the detailed descriptions in the foregoing embodiment. Details are not described herein again.

In the method for controlling the transmit power of the PUCCH in this embodiment of this application, the PRACH transmit power ramp-up when the random access between the user equipment UE and the base station succeeds is obtained. When the RRC setup message sent by the base station includes the power configuration field corresponding to the PUCCH, the PRACH transmit power ramp-up is adjusted based on the PRACH transmit power ramp-up and/or the value of the power configuration field. Then, the TPC instruction sent by the base station is obtained, and the sum of the adjusted PRACH transmit power ramp-up and the TPC power adjustment value corresponding to the PUCCH and included in the TPC instruction is determined as the target power adjustment value corresponding to the PUCCH. Then, the target transmit power corresponding to the PUCCH is determined based on the preset PUCCH transmit power calculation formula, the value of the power configuration field, and the target power adjustment value. In this way, when the base station configures the power configuration field corresponding to the PUCCH in the RRC setup message, the PRACH transmit power ramp-up is flexibly adjusted based on the PRACH transmit power ramp-up during the random access and an actual value level of the power configuration field, so that when the transmit power of the PUCCH is subsequently determined, the transmit power of the PUCCH does not decrease steeply due to a change of the PRACH transmit power ramp-up, to ensure successful sending of information carried on the PUCCH. In addition, the transmit power of the PUCCH is further finely adjusted based on the TPC instruction delivered by the base station. Therefore, congestion in uplink data transmission between the base station and the UE is further avoided, communication stability and smoothness of a system are further improved, and the power consumption of the UE is further reduced.

It should be understood that sequence numbers of the steps do not mean execution sequences in the foregoing embodiments. The execution sequences of the processes should be determined according to functions and internal logic of the processes, and should not constitute any limitation on the implementation processes of the embodiments of this application.

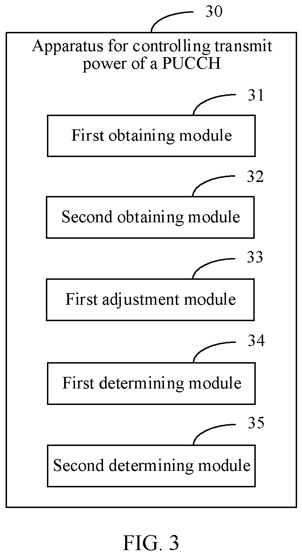

Corresponding to the method for controlling the transmit power of the PUCCH described in the foregoing embodiments, FIG. 3 is a block diagram of a structure of an apparatus for controlling transmit power of a PUCCH according to an embodiment of this application. For ease of description, only parts related to this embodiment of this application are shown.

Refer to FIG. 3. The apparatus 30 includes:

a first obtaining module 31, configured to obtain a PRACH transmit power ramp-up when random access between a UE and a base station succeeds;
a second obtaining module 32, configured to obtain an RRC setup message sent by the base station;
a first adjustment module 33, configured to adjust, when the RRC setup message includes a power configuration field corresponding to the PUCCH, the PRACH transmit power ramp-up based on the PRACH transmit power ramp-up and/or a value of the power configuration field;
a first determining module 34, configured to determine, based on an adjusted PRACH transmit power ramp-up, a target power adjustment value corresponding to the PUCCH; and
a second determining module 35, configured to determine, based on a preset PUCCH transmit power calculation formula, the value of the power configuration field, and the target power adjustment value, target transmit power corresponding to the PUCCH.

During actual use, the apparatus for controlling the transmit power of the PUCCH in embodiments of this application may be configured in any UE, to perform the method for controlling the transmit power of the PUCCH.

The apparatus for controlling the transmit power of the PUCCH in this embodiment of this application is configured to: obtain the PRACH transmit power ramp-up when the random access between the user equipment UE and the base station succeeds; adjust, when the RRC setup message sent by the base station includes the power configuration field corresponding to the PUCCH, the PRACH transmit power ramp-up based on the PRACH transmit power ramp-up and/or the value of the power configuration field; determine, based on the adjusted PRACH transmit power ramp-up, the target power adjustment value corresponding to the PUCCH; and determine, based on the preset PUCCH transmit power calculation formula, the value of the power configuration field, and the target power adjustment value, the target transmit power corresponding to the PUCCH. In this way, when the base station configures the power configuration field corresponding to the PUCCH in the RRC setup message, the PRACH transmit power ramp-up is flexibly adjusted based on the PRACH transmit power ramp-up during the random access and an actual value level of the power configuration field, so that when the transmit power of the PUCCH is subsequently determined, the transmit power of the PUCCH does not decrease steeply due to a change of the PRACH transmit power ramp-up, to ensure successful sending of information carried on the PUCCH. Therefore, congestion in uplink data transmission between the base station and the UE is avoided, and communication stability and smoothness of a system are improved.

In a possible implementation of this application, the first adjustment module 33 includes:

a first adjustment unit, configured to set the PRACH transmit power ramp-up to 0 when the PRACH transmit power ramp-up is less than or equal to a first threshold; and
a second adjustment unit, configured to maintain the PRACH transmit power ramp-up unchanged when the PRACH transmit power ramp-up is greater than the first threshold.

Further, in another possible implementation of this application, the first adjustment module 33 includes:

a third adjustment unit, configured to set the PRACH transmit power ramp-up to 0 when the value of the power configuration field is greater than a second threshold; and
a fourth adjustment unit, configured to maintain the PRACH transmit power ramp-up unchanged when the value of the power configuration field is less than or equal to the second threshold.

Further, in still another possible implementation of this application, the first adjustment module 33 includes:

a fifth adjustment unit, configured to set the PRACH transmit power ramp-up to 0 when the PRACH transmit power ramp-up is less than or equal to a first threshold and the value of the power configuration field is greater than a second threshold; and
a sixth adjustment unit, configured to maintain the PRACH transmit power ramp-up unchanged when the PRACH transmit power ramp-up is greater than the first threshold or the value of the power configuration field is less than or equal to the second threshold.

Further, in yet another possible implementation of this application, the first adjustment module 33 includes:

a first determining unit, configured to determine a difference between the PRACH transmit power ramp-up and the value of the power configuration field;
a seventh adjustment unit, configured to set the PRACH transmit power ramp-up to 0 when the difference is less than or equal to a third threshold; and
an eighth adjustment unit, configured to maintain the PRACH transmit power ramp-up unchanged when the difference is greater than the third threshold.

Further, in yet another possible implementation of this application, the first adjustment module 33 includes:

a second determining unit, configured to determine initial transmit power corresponding to an initial PUCCH message, where the initial PUCCH message is a feedback message including a parsing result of the RRC setup message and sent by the UE to the base station through the PUCCH;
a ninth adjustment unit, configured to set the PRACH transmit power ramp-up to 0 when the initial transmit power is less than maximum transmit power corresponding to the UE; and
a tenth adjustment unit, configured to maintain the PRACH transmit power ramp-up unchanged when the initial transmit power is greater than or equal to the maximum transmit power.

Further, in yet another possible implementation of this application, the second determining unit is specifically configured to:
determine, based on the preset PUCCH transmit power calculation formula and the PRACH transmit power ramp-up, the initial transmit power corresponding to the PUCCH.

Further, in another possible implementation of this application, the first adjustment module 33 includes:

a first determining unit, configured to determine a difference between the PRACH transmit power ramp-up and the value of the power configuration field;
a second determining unit, configured to determine, based on the preset PUCCH transmit power calculation formula and the PRACH transmit power ramp-up, initial transmit power corresponding to the PUCCH;
an eleventh adjustment unit, configured to set the PRACH transmit power ramp-up to 0 when the difference is less than or equal to a third threshold and the initial transmit power is less than maximum transmit power corresponding to the UE; and
a twelfth adjustment unit, configured to maintain the PRACH transmit power ramp-up unchanged when the difference is greater than the third threshold or the initial transmit power is greater than or equal to the maximum transmit power.

Further, in still another possible implementation of this application, the apparatus 30 further includes:
a second adjustment module, configured to maintain the PRACH transmit power ramp-up unchanged when the RRC setup message does not include the power configuration field.

Correspondingly, the second determining module 35 includes:

a third determining unit, configured to determine, based on the preset PUCCH transmit power calculation formula and the target power adjustment value, the target transmit power corresponding to the PUCCH.

Further, in yet another possible implementation of this application, the apparatus 30 further includes:

a third obtaining module, configured to obtain a TPC instruction sent by the base station, where the TPC instruction includes a TPC power adjustment value corresponding to the PUCCH.

Correspondingly, the first determining module 34 includes:

a fourth determining unit, configured to determine a sum of the adjusted PRACH transmit power ramp-up and the TPC power adjustment value as the target power adjustment value.

It should be noted that, because content such as information interaction and execution processes between the foregoing apparatuses/units is based on the same idea as that of the method embodiments of this application, for specific functions and technical effects thereof, refer to the method embodiment part. Details are not described herein again.

A person skilled in the art may clearly understand that, for the objective of convenient and brief description, only division of the foregoing functional units and modules is used as an example for description. In actual application, the foregoing functions may be allocated to and completed by different functional units and modules according to requirements. That is, an internal structure of the apparatus is divided into different functional units and modules to complete all or some of the functions described above. The functional units and modules in the embodiments may be integrated into one processing unit, or each of the units may exist alone physically, or two or more units are integrated into one unit. The integrated unit may be implemented in a form of hardware or in a form of a software functional unit. In addition, specific names of the functional units and modules are merely intended for the convenience of distinguishing between each other, and are not intended to limit the protection scope of this application. For specific work processes of the units and apparatus in the system, refer to the corresponding processes in the foregoing method embodiments. Details are not described herein again.

To implement the foregoing embodiments, this application further provides a UE.

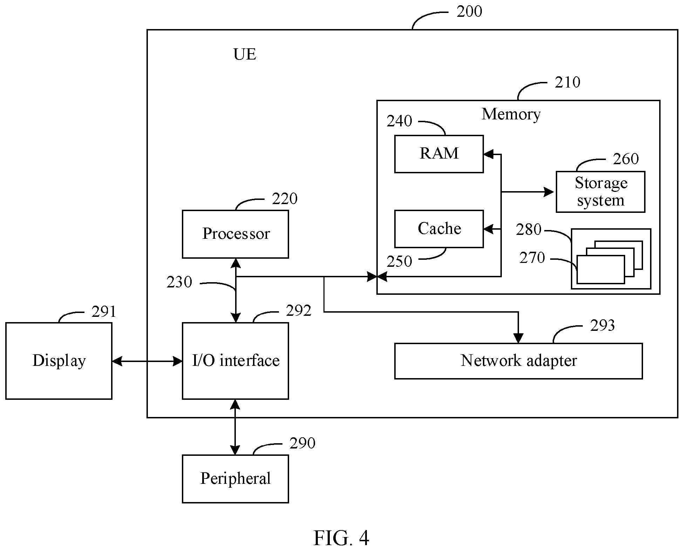

FIG. 4 is a schematic structural diagram of a UE according to an embodiment of this application.

As shown in FIG. 4, the UE 200 includes:

a memory 210, at least one processor 220, and a bus 230 connecting different components (including the memory 210 and the processor 220), where the memory 210 stores a computer program, and when the processor 220 executes the program, the method for controlling transmit power of a PUCCH according to this embodiment of this application is implemented.

The bus 230 represents one or more of several types of bus structures, including a memory bus or a memory controller, a peripheral bus, an accelerated graphics port, a processor, or a local bus using any of a plurality of bus structures. For example, these architectures include but are not limited to an industry standard architecture (ISA) bus, a micro channel architecture (MCA) bus, an enhanced ISA bus, a video electronics standards association (VESA) local bus, and a peripheral component interconnect (PCI) bus.

The UE 200 typically includes a plurality of electronic device-readable media. These media may be any available media that can be accessed by the UE 200, including volatile media and non-volatile media, and removable media and non-removable media.

The memory 210 may further include a computer system-readable medium in a volatile memory form, for example, a random access memory (RAM) 240 and/or a cache memory 250. The UE 200 may further include another removable/non-removable volatile/non-volatile computer system storage medium. For example only, a storage system 260 may be configured to read/write a non-removable non-volatile magnetic medium (not shown in FIG. 4 and generally referred to as a "hard disk drive"). Although not shown in FIG. 4, a magnetic disk drive configured to read/write a removable non-volatile magnetic disk (for example, a "floppy disk") and an optical disk drive configured to read/write a removable non-volatile optical disk (for example, a CD-ROM, a DVD-ROM, or another optical medium) may be provided. In these cases, each drive may be connected to the bus 230 through one or more data medium interfaces. The memory 210 may include at least one program product. The program product includes a set of (for example, at least one) program modules. These program modules are configured to perform the functions of the embodiments of this application.

A program/utility tool 280 including a set of (at least one) program modules 270 may be stored, for example, in the memory 210. The program module 270 includes but is not limited to an operating system, one or more application programs, another program module, and program data. Each or some combination of these examples may include implementation of a network environment. The program module 270 generally performs the functions and/or the methods in the embodiments described in this application.

The UE 200 may also communicate with one or more peripherals 290 (for example, a keyboard, a pointing device, and a display 291), may further communicate with one or more devices that enable a user to interact with the UE 200, and/or communicate with any device (for example, a network card or a modem) that enables the UE 200 to communicate with one or more other computing devices. Such communication may be performed through an input/output (I/O) interface 292. In addition, the UE 200 may further communicate with one or more networks (for example, a local area network (LAN), a wide area network (WAN), and/or a public network such as the Internet) through a network adapter 293. As shown in the figure, the network adapter 293 communicates with other modules of the UE 200 through the bus 230. It should be understood that, although not shown in the figure, other hardware and/or software modules may be used in combination with the UE 200, including but not limited to: microcode, a device driver, a redundant processing unit, an external magnetic disk drive array, a RAID system, a tape drive, a data backup storage system, and the like.

The processor 220 runs the program stored in the memory 210, to perform various function applications and data processing.

It should be noted that, for an implementation process and a technical principle of the UE in this embodiment, refer to the foregoing explanatory descriptions of the method for controlling transmit power of a PUCCH in this embodiment of this application. Details are not described herein again.

An embodiment of this application further provides a computer-readable storage medium. The computer-readable storage medium stores a computer program. When the computer program is executed by a processor, the steps in the foregoing method embodiments are implemented.

An embodiment of this application provides a computer program product. When the computer program product runs on a UE, the UE is enabled to implement the steps in the foregoing method embodiments.

When the integrated unit is implemented in the form of a software functional unit and sold or used as an independent product, the integrated unit may be stored in a computer-readable storage medium. Based on this understanding, in this application, all or some of the procedures in the methods in the embodiments may be implemented by using a computer program instructing relevant hardware. The computer program may be stored in a computer-readable storage medium. When the computer program is executed by a processor, the steps in the foregoing method embodiments may be performed. The computer program includes computer program code. The computer program code may be in a source code form, an object code form, an executable file, some intermediate forms, or the like. The computer-readable storage medium may include at least: any entity or apparatus that can carry the computer program code to an apparatus/the UE, a recording medium, a computer memory, a read only memory (Read-Only Memory, ROM), a random access memory (Random Access Memory, RAM), an electrical carrier signal, a telecommunication signal, and a software distribution medium. For example, the computer-readable storage medium may include a USB flash drive, a removable hard disk, a magnetic disk, or an optical disc. In some jurisdictions, according to legislation and patent practice, the computer-readable medium may not be an electrical carrier signal or a telecommunication signal.

In the foregoing embodiments, the descriptions of the embodiments have their respective focuses. For a part that is not described in detail or recorded in an embodiment, refer to related descriptions in other embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

In the embodiments provided in this application, it should be understood that the disclosed apparatus/UE and method may be implemented in other manners. For example, the described apparatus/UE embodiment is merely an example. For example, the module or unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electric, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

The foregoing embodiments are merely intended for describing the technical solutions of this application, but not for limiting this application. Although this application is described in detail with reference to the foregoing embodiments, a person of ordinary skill in the art should understand that modifications may be still made to the technical solutions recorded in the foregoing embodiments or equivalent replacements may be made to some technical features thereof, and these modifications or replacements do not cause the essence of the corresponding technical solutions to depart from the spirit and scope of the technical solutions of the embodiments of this application, which should all fall within the protection scope of this application.

**Claims**

1. A method for controlling transmit power of an uplink control channel, the method comprising:

   obtaining a random access channel PRACH transmit power ramp-up when random access between a user equipment UE and a base station succeeds;
   obtaining a radio resource control RRC setup message sent by the base station;
   adjusting, when the RRC setup message comprises a power configuration field corresponding to the uplink control channel PUCCH, the PRACH transmit power ramp-up based on the PRACH transmit power ramp-up and/or a value of the power configuration field;
   determining, based on an adjusted PRACH transmit power ramp-up, a target power adjustment value corresponding to the PUCCH; and
   determining, based on a preset PUCCH transmit power calculation formula, the value of the power configuration field, and the target power adjustment value, target transmit power corresponding to the PUCCH.

2. The method according to claim 1, wherein the adjusting the PRACH transmit power ramp-up based on the PRACH transmit power ramp-up and/or a value of the power configuration field comprises:

   setting the PRACH transmit power ramp-up to 0 if the PRACH transmit power ramp-up is less than or equal to a first threshold; or
   maintaining the PRACH transmit power ramp-up unchanged if the PRACH transmit power ramp-up is greater than the first threshold.

3. The method according to claim 1, wherein the adjusting the PRACH transmit power ramp-up based on the PRACH transmit power ramp-up and/or a value of the power configuration field comprises:

   setting the PRACH transmit power ramp-up to 0 if the value of the power configuration field is greater than a second threshold; or
   maintaining the PRACH transmit power ramp-up unchanged if the value of the power configuration field is less than or equal to the second threshold.

4. The method according to claim 1, wherein the adjusting the PRACH transmit power ramp-up based on the PRACH transmit power ramp-up and/or a value of the power configuration field comprises:

   setting the PRACH transmit power ramp-up to 0 if the PRACH transmit power ramp-up is less than or equal to a first threshold and the value of the power configuration field is greater than a second threshold; or
   maintaining the PRACH transmit power ramp-up unchanged if the PRACH transmit power ramp-up is greater than the first threshold or the value of the power configuration field is less than or equal to the second threshold.

5. The method according to claim 1, wherein the adjusting the PRACH transmit power ramp-up based on the PRACH transmit power ramp-up and/or a value of the power configuration field comprises:

   determining a difference between the PRACH transmit power ramp-up and the value of the power configuration field; and
   setting the PRACH transmit power ramp-up to 0 if the difference is less than or equal to a third threshold; or
   maintaining the PRACH transmit power ramp-up unchanged if the difference is greater than the third threshold.

6. The method according to claim 1, wherein the adjusting the PRACH transmit power ramp-up based on the PRACH transmit power ramp-up and/or a value of the power configuration field comprises:

   determining initial transmit power corresponding to an initial PUCCH message, wherein the initial PUCCH message is a feedback message comprising a parsing result of the RRC setup message and sent by the UE to the base station through the PUCCH; and
   setting the PRACH transmit power ramp-up to 0 if the initial transmit power is less than maximum transmit power corresponding to the UE; or
   maintaining the PRACH transmit power ramp-up unchanged if the initial transmit power is greater than or equal to the maximum transmit power.

7. The method according to claim 6, wherein the determining initial transmit power corresponding to an initial PUCCH message comprises:
determining, based on the preset PUCCH transmit power calculation formula and the PRACH transmit power ramp-up, the initial transmit power corresponding to the PUCCH.

8. The method according to claim 1, wherein the adjusting the PRACH transmit power ramp-up based on the PRACH transmit power ramp-up and/or a value of the power configuration field comprises:

determining a difference between the PRACH transmit power ramp-up and the value of the power configuration field;
determining initial transmit power corresponding to an initial PUCCH message, wherein the initial PUCCH message is a feedback message comprising a parsing result of the RRC setup message and sent by the UE to the base station through the PUCCH; and
setting the PRACH transmit power ramp-up to 0 if the difference is less than or equal to a third threshold and the initial transmit power is less than maximum transmit power corresponding to the UE; or
maintaining the PRACH transmit power ramp-up unchanged if the difference is greater than the third threshold or the initial transmit power is greater than or equal to the maximum transmit power.

9. The method according to any one of claims 1 to 8, wherein before the determining, based on an adjusted PRACH transmit power ramp-up, a target power adjustment value corresponding to the PUCCH, the method further comprises:

maintaining the PRACH transmit power ramp-up unchanged when the RRC setup message does not comprise the power configuration field; and
the determining, based on a preset PUCCH transmit power calculation formula, the value of the power configuration field, and the target power adjustment value, target transmit power corresponding to the PUCCH comprises:
determining, based on the preset PUCCH transmit power calculation formula and the target power adjustment value, the target transmit power corresponding to the PUCCH.

10. The method according to any one of claims 1 to 9, wherein before the determining, based on an adjusted PRACH transmit power ramp-up, a target power adjustment value corresponding to the PUCCH, the method further comprises:

obtaining a transmit power control TPC instruction sent by the base station, wherein the TPC instruction comprises a TPC power adjustment value corresponding to the PUCCH; and
the determining, based on an adjusted PRACH transmit power ramp-up, a target power adjustment value corresponding to the PUCCH comprises:
determining a sum of the adjusted PRACH transmit power ramp-up and the TPC power adjustment value as the target power adjustment value.

11. An apparatus for controlling transmit power of a PUCCH, the apparatus comprising:

a first obtaining module, configured to obtain a PRACH transmit power ramp-up when random access between a UE and a base station succeeds;
a second obtaining module, configured to obtain an RRC setup message sent by the base station;
a first adjustment module, configured to adjust, when the RRC setup message comprises a power configuration field corresponding to the PUCCH, the PRACH transmit power ramp-up based on the PRACH transmit power ramp-up and/or a value of the power configuration field;
a first determining module, configured to determine, based on an adjusted PRACH transmit power ramp-up, a target power adjustment value corresponding to the PUCCH; and
a second determining module, configured to determine, based on a preset PUCCH transmit power calculation formula, the value of the power configuration field, and the target power adjustment value, target transmit power corresponding to the PUCCH.

12. The apparatus according to claim 11, wherein the first adjustment module comprises:

a first adjustment unit, configured to set the PRACH transmit power ramp-up to 0 when the PRACH transmit power ramp-up is less than or equal to a first threshold; and
a second adjustment unit, configured to maintain the PRACH transmit power ramp-up unchanged when the PRACH transmit power ramp-up is greater than the first threshold.

13. The apparatus according to claim 11, wherein the first adjustment module comprises:

a third adjustment unit, configured to set the PRACH transmit power ramp-up to 0 when the value of the power configuration field is greater than a second threshold; and
a fourth adjustment unit, configured to maintain the PRACH transmit power ramp-up unchanged when the value of the power configuration field is less than or equal to the second threshold.

14. The apparatus according to claim 11, wherein the first adjustment module comprises:

a fifth adjustment unit, configured to set the PRACH transmit power ramp-up to 0 when the PRACH transmit power ramp-up is less than or equal to a first threshold and the value of the power configuration field is greater than a second threshold; and
a sixth adjustment unit, configured to maintain the PRACH transmit power ramp-up unchanged when the PRACH transmit power ramp-up is greater than the first threshold or the value of the power configuration field is less than or equal to the second threshold.

15. The apparatus according to claim 11, wherein the first adjustment module comprises:

a first determining unit, configured to determine a difference between the PRACH transmit power ramp-up and the value of the power configuration field;
a seventh adjustment unit, configured to set the PRACH transmit power ramp-up to 0 when the difference is less than or equal to a third threshold; and
an eighth adjustment unit, configured to maintain the PRACH transmit power ramp-up unchanged when the difference is greater than the third threshold.

16. The apparatus according to claim 11, wherein the first adjustment module comprises:

a second determining unit, configured to determine initial transmit power corresponding to an initial PUCCH message, wherein the initial PUCCH message is a feedback message comprising a parsing result of the RRC setup message and sent by the UE to the base station through the PUCCH;
a ninth adjustment unit, configured to set the PRACH transmit power ramp-up to 0 when the initial transmit power is less than maximum transmit power corresponding to the UE; and
a tenth adjustment unit, configured to maintain the PRACH transmit power ramp-up unchanged when the initial transmit power is greater than or equal to the maximum transmit power.

17. The apparatus according to claim 16, wherein the second determining unit is specifically configured to:
determine, based on the preset PUCCH transmit power calculation formula and the PRACH transmit power ramp-up, the initial transmit power corresponding to the PUCCH.

18. The apparatus according to claim 11, wherein the first adjustment module comprises:

a first determining unit, configured to determine a difference between the PRACH transmit power ramp-up and the value of the power configuration field;
a second determining unit, configured to determine, based on the preset PUCCH transmit power calculation formula and the PRACH transmit power ramp-up, initial transmit power corresponding to the PUCCH;
an eleventh adjustment unit, configured to set the PRACH transmit power ramp-up to 0 when the difference is less than or equal to a third threshold and the initial transmit power is less than maximum transmit power corresponding to the UE; and
a twelfth adjustment unit, configured to maintain the PRACH transmit power ramp-up unchanged when the difference is greater than the third threshold or the initial transmit power is greater than or equal to the maximum transmit power.

19. The apparatus according to any one of claims 11 to 18, wherein the apparatus further comprises:

a second adjustment module, configured to maintain the PRACH transmit power ramp-up unchanged when the RRC setup message does not comprise the power configuration field; and
the second determining module comprises:
a third determining unit, configured to determine, based on the preset PUCCH transmit power calculation formula and the target power adjustment value, the target transmit power corresponding to the PUCCH.

20. The apparatus according to any one of claims 11 to 19, wherein the apparatus further comprises:

a third obtaining module, configured to obtain a TPC instruction sent by the base station, wherein the TPC instruction comprises a TPC power adjustment value corresponding to the PUCCH; and
the first determining module comprises:
a fourth determining unit, configured to determine a sum of the adjusted PRACH transmit power ramp-up and the TPC power adjustment value as the target power adjustment value.

21. A UE, comprising a memory, a processor, and a computer program stored in the memory and executable on the processor, wherein when the processor executes the computer program, the method according to any one of claims 1 to 10 is implemented.

22. A computer-readable storage medium, storing a computer program, wherein when the computer program is executed by a processor, the method according to any one of claims 1 to 10 is implemented.

Obtain a PRACH transmit power ramp-up when random access between a UE and a base station succeeds

101

Obtain an RRC setup message sent by the base station

102

Adjust, when the RRC setup message includes a power configuration field corresponding to a PUCCH, the PRACH transmit power ramp-up based on the PRACH transmit power ramp-up and/or a value of the power configuration field

103

Determine, based on an adjusted PRACH transmit power ramp-up, a target power adjustment value corresponding to the PUCCH

104

Determine, based on a preset PUCCH transmit power calculation formula, the value of the power configuration field, and the target power adjustment value, target transmit power corresponding to the PUCCH

105

FIG. 1

Obtain a PRACH transmit power ramp-up when random access between a UE and a base station succeeds ⌐ 201

Obtain an RRC setup message sent by the base station ⌐ 202

Adjust, when the RRC setup message includes a power configuration field corresponding to a PUCCH, the PRACH transmit power ramp-up based on the PRACH transmit power ramp-up and/or a value of the power configuration field ⌐ 203

Obtain a TPC instruction sent by the base station, where the TPC instruction includes a TPC power adjustment value corresponding to the PUCCH ⌐ 204

Determine a sum of an adjusted PRACH transmit power ramp-up and the TPC power adjustment value as a target power adjustment value ⌐ 205

Determine target transmit power corresponding to the PUCCH based on a preset PUCCH transmit power calculation formula, the value of the power configuration field, and the target power adjustment value ⌐ 206

FIG. 2

— 30

Apparatus for controlling transmit
power of a PUCCH

— 31

First obtaining module

— 32

Second obtaining module

— 33

First adjustment module

— 34

First determining module

— 35

Second determining module

FIG. 3

FIG. 4

| INTERNATIONAL SEARCH REPORT | International application No. |
|---|---|
| | **PCT/CN2023/136369** |

**A. CLASSIFICATION OF SUBJECT MATTER**

H04W52/14(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXTC, WPABS, DWPI, CNKI: 功率控制, 上行, 控制信道, 上行链路控制信道, 随机接入, 增量, 上调, 爬升, 攀升, 无线资源控制, 配置, 参数, 调整, 重置, 置零, 置0, 不变, power control, UL, PUCCH, RA, PRACH, ramp+, RRC, config+, parameter, reset, unchange

**C. DOCUMENTS CONSIDERED TO BE RELEVANT**

| Category* | Citation of document, with indication, where appropriate, of the relevant passages | Relevant to claim No. |
|---|---|---|
| PX | CN 117135735 A (HONOR TERMINAL CO., LTD.) 28 November 2023 (2023-11-28) claims 1-22 | 1-22 |
| X | CN 102958045 A (HUAWEI TECHNOLOGIES CO., LTD.) 06 March 2013 (2013-03-06) description, paragraphs [0057]-[0238] | 1, 9-11, 19-22 |
| A | CN 102958045 A (HUAWEI TECHNOLOGIES CO., LTD.) 06 March 2013 (2013-03-06) description, paragraphs [0057]-[0238] | 2-10, 12-22 |
| A | CN 102724745 A (HUAWEI TECHNOLOGIES CO., LTD.) 10 October 2012 (2012-10-10) entire document | 1-22 |
| A | CN 103124428 A (CHINA ACADEMY OF TELECOMMUNICATIONS TECHNOLOGY) 29 May 2013 (2013-05-29) entire document | 1-22 |
| A | US 2020059869 A1 (SAMSUNG ELECTRONICS CO., LTD.) 20 February 2020 (2020-02-20) entire document | 1-22 |

☑ Further documents are listed in the continuation of Box C. ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 March 2024** | **06 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/136369** |

**C.    DOCUMENTS CONSIDERED TO BE RELEVANT**

| Category* | Citation of document, with indication, where appropriate, of the relevant passages | Relevant to claim No. |
| --- | --- | --- |
| A | 3GPP. "3rd Generation Partnership Project;Technical Specification Group Radio Access Network; NR;Physical layer procedures for control(Release 17)" <br> *3GPP TS 38.213 V17.4.0 (2022-12)*, 04 January 2023 (2023-01-04), <br>     section 7.2 | 1-22 |

Form PCT/ISA/210 (second sheet) (July 2022)

**INTERNATIONAL SEARCH REPORT**
Information on patent family members

International application No.

**PCT/CN2023/136369**

| Patent document cited in search report | | | Publication date (day/month/year) | Patent family member(s) | | | Publication date (day/month/year) |
|---|---|---|---|---|---|---|---|
| CN | 117135735 | A | 28 November 2023 | | None | | |
| CN | 102958045 | A | 06 March 2013 | EP | 2741549 | A1 | 11 June 2014 |
| | | | | US | 2014177500 | A1 | 26 June 2014 |
| | | | | WO | 2013029552 | A1 | 07 March 2013 |
| | | | | EP | 3324684 | A2 | 23 May 2018 |
| | | | | US | 2019364512 | A1 | 28 November 2019 |
| | | | | US | 2016309417 | A1 | 20 October 2016 |
| | | | | CN | 105101385 | A | 25 November 2015 |
| CN | 102724745 | A | 10 October 2012 | US | 2014023028 | A1 | 23 January 2014 |
| | | | | WO | 2012130012 | A1 | 04 October 2012 |
| | | | | EP | 2685767 | A1 | 14 September 2016 |
| CN | 103124428 | A | 29 May 2013 | WO | 2013071778 | A1 | 23 May 2013 |
| | | | | CN | 102378341 | A | 14 March 2012 |
| US | 2020059869 | A1 | 20 February 2020 | KR | 20180123400 | A | 16 November 2018 |
| | | | | WO | 2018208065 | A1 | 15 November 2018 |
| | | | | EP | 3592047 | A1 | 08 January 2020 |

Form PCT/ISA/210 (patent family annex) (July 2022)

**REFERENCES CITED IN THE DESCRIPTION**

**Patent documents cited in the description**

- CN 202310081381X